Europäisches Patentamt

European Patent Office

Office européen des brevets

(19)

(11) Publication number: **0 145 845**
A1

(12) # EUROPEAN PATENT APPLICATION

(21) Application number: 84110278.3

(22) Date of filing: 29.08.84

(51) Int. Cl.⁴: **G 02 B 17/08**

(30) Priority: 03.10.83 US 538397

(43) Date of publication of application: 26.06.85
Bulletin 85/26

(84) Designated Contracting States: DE FR GB

(71) Applicant: TEXAS INSTRUMENTS INCORPORATED,
13500 North Central Expressway, Dallas
Texas 75265 (US)

(72) Inventor: Gibbons, Robert C., 709 Parkview Cr.,
Richardson, TX 75080 (US)
Inventor: Cottle, Wilbur W., 461 N. Maxwell Creek Rd.,
Plano TX 75074 (US)

(74) Representative: Schwepfinger, Karl-Heinz, Dipl.-Ing. et
al, Prinz, Leiser, Bunke & Partner Ernsbergerstrasse 19,
D-8000 München 60 (DE)

(54) Dual field of view catadioptric optical system.

(57) A dual field of view catadioptric optical system is disclosed which includes a narrow field of view (FOV) and a wide FOV. The narrow field of view includes an apertured stationary primary reflector (52) and a secondary reflector (22) which may be pivoted into a common optical path for blocking radiant energy for the wide field of view during operation in the narrow field of view and pivoted out of the common optical path for operation in the wide field of view. In another embodiment, the secondary reflector is replaced by a transparent/reflector which is always located in the common optical path. The element is transparent to radiant energy until heated at which time it becomes reflective. Thus, when transparent, the system operates in the wide field of view mode and when reflective, the system operates in the narrow field of view mode.

This invention relates to optical systems and more particularly to a dual field of view catadioptric optical system.

In the past dual field of view optical systems, such as that disclosed in United States Patent 3,610,930, issued October 5, 1971 to Dennis C. Lacy, have included a stationary lens which functions as a window for a housing for the system. The stationary lens is used with either a narrow field of view lens assembly or a wide field of view lens assembly. The two lens assemblies are rotatably connected in the housing so that either field of view can be selected or both fields of view removed from the optical path.

Also in the past it has been known to increase the field of view in an extensoscope by replacing an erector lens with a shorter focus lens (George S. Monk and W. H. McCorkle, Optical Instrumentation 169, 1954).

The disadvantages of these systems are, respectively, the cost and size of the pivotable off axis components and the manual substitution of lenses to obtain different fields of view.

Accordingly, it is an object of this invention to provide a low cost optical system which is compact in size and light in weight.

Another object of the invention is to provide a centered, uni-axial reflective optical system with a dual field of view having both a high resolution, narrow field of view and a lower resolution, wide field of view.

Briefly stated, the invention comprises a shared objective dual field of view optical system utilizing a reflective objective for the narrow field of view with a refractive relay group to transfer the image plane to an accessible location behind the primary mirror.

These and other objects and features of the invention will become more readily understood in the following detailed description taken in conjunction with the drawings in which:

Figure 1a is a top plan view of the dual field of view optical system including the reflector switching mechanism;

Figure 1b is a front plan view of the dual field of view optical system of Figure 1a;

Figure 2 is a side view of the narrow field of view optics of the dual field of view optical system in a housing;

Figure 3 is a side view of the wide field of view optics of the dual field of view optical system in a housing.

Figure 4 is a plan view of the narrow field of view of the reflective afocal optics for the dual field of view optical system;

Figure 5 is a plan view of the wide field of view reflective afocal optics with the reflector pivoted out of the optical path of the dual field of view optical system; and

Figure 6 is a side view of a second embodiment of the dual field of view optical system.

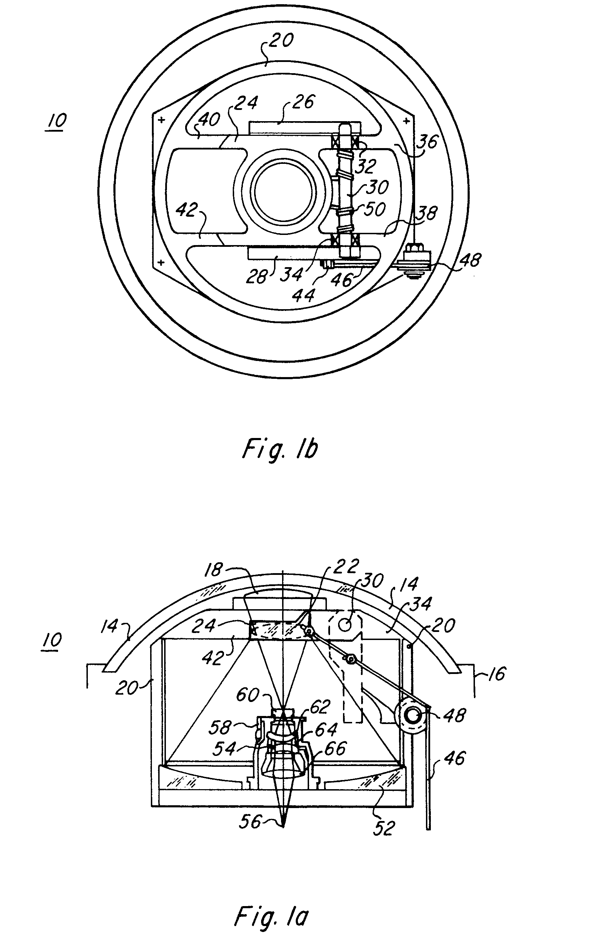

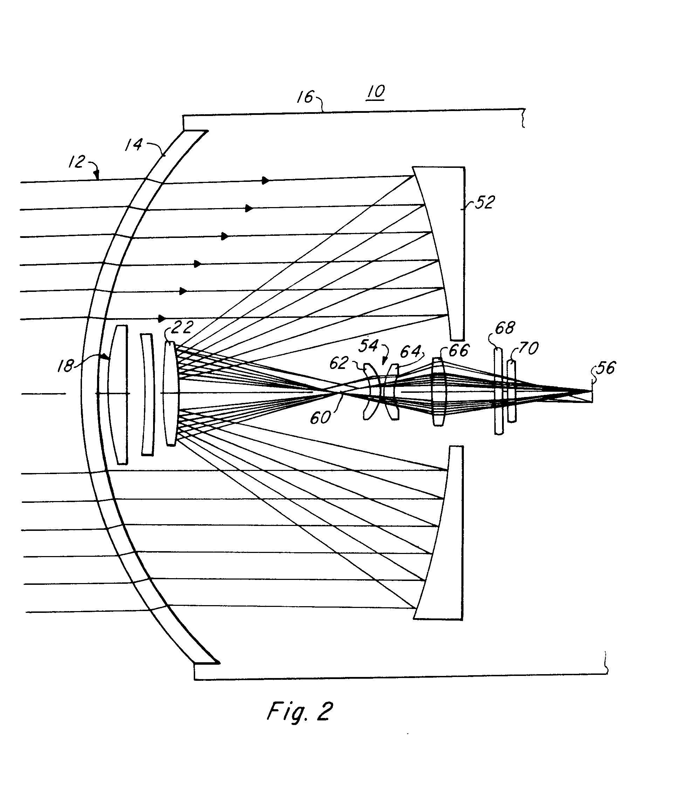

Referring now to Figures 1a and 1b, the first embodiment of the dual field of view optical apparatus 10 has utility in radiant energy (including visible and infrared) systems. The incoming radiation 12 (Fig.s 2-5) passes through a window 14 (Fig. 1a) of dome 16 (Fig. 2). Dome 16 protects the internal optics and other equipment from the physical elements of the environment. Window 14 is a refractive optical element which for an infrared system is made, for example, of zinc sulfide and has a spherical shape.

A wide field of view optic 18 is rigidly fixed to one end of an optical housing 20 centrally disposed on the optical axis adjacent to the window 14. A secondary reflector 22 which may be, for example, an aluminum mirror is rigidly mounted in a frame 24 (Fig. 1b). Frame 24 is attached to supporting plates 26 and 28. Plates 26 and 28 are fixed to a connecting pin 30 which is journaled in bearings 32 and 34 of ears 36 and 38 of the optics housing 20. Frame 24 has its side opposite the journaled end supported by corresponding flanges 40 and 42.

Plate 28 (Figs. 1a and 1b) has an eye 44 to which a cable 46 is attached. Cable 46 passes through the optics housing 20 and a guide pulley 48 to an actuator (not shown). The guide pulley 48 is attached to the optics housing 20. The actuator pulls the cable 46 to pivot the secondary reflector out of the narrow field of view position to establish the wide field of view. A return spring 50 mounted on pin 30 and in engagement with the secondary reflectors mounting frame 24 acts to return the secondary reflector into the narrow field of view position when the tension is removed from cable 46. It will be appreciated that the above-described mechanical secondary lens assembly actuator is only one example and those persons skilled in the art have knowledge of a large number of alternative lens switching mechanisms.

An apertured primary reflector 52 (Fig. 1a) which may be, for example, an aluminum mirror is attached to the optics housing 20. A relay optical system 54 is mounted in the apertured primary reflector 52 along the optical axis to form a second focal plane 56. The relay optical system comprises an eye piece 58 having one end 60 at a first focal plane, collimating lenses 62 and 64 within the housing and a focusing lens 66 at the end opposite the end 60 of the eye piece 58. Lens 62 is a concave-convex positive lens, lens 64 is a convex-concave negative lens and lens 66 is a convex-convex positive lens. Lenses 62, 64 and 66 are refractive and all surfaces are spherical. By way of example, lens 64 is a zinc sulphide lens; while lenses 62 and 66 are chalcogenide glass lenses such as TI1173 glass manufactured and sold by Texas Instruments Incorporated, Dallas, Texas.

Referring now to Figure 2 for a description of the narrow field of view operation. In Figure 2, only the optical elements have been retained for clarity of the description and the return spring 50 (Fig. 1b) is maintaining the secondary reflector 22 in the optical path for narrow field of view operation. In the narrow field of view operation mode the incoming energy 12 is refracted as it passes through window 14 to the reflecting surface of the primary reflector 52.

The radiant energy is folded and reflected off the reflecting surface of the secondary reflector 22. In the preferred embodiment the secondary reflector 22 blocks the wide field of view optical path.

The refractive window 14, primary reflector 52 and secondary reflector 22 form a catadioptric objective optical system which folds and focuses the incoming radial energy to form a first focal plane 60 which is symmetrical around the optical axis of the optical system 10. The primary reflector 22 defines the aperture stop of the optical system 10. The image of the aperture stop as viewed from the scene appearing at the window is defined as the entrance pupil.

The relay optical system 54 is optically positioned to extend the first field of view through a window 68 in a vacuum housing and exit pupil aperture 70 to a second field of view 56. A detector matrix (not shown) of, for example, an infrared system such as that disclosed in United States Patent Application Serial No. 325,459 filed November 27, 1981 (TI-8895) for Compact, High Cold Shield Efficiency Optical System, may be positioned at the second field of view for producing an electrical representation of the intensity of the radiant energy impinging thereon. The relay optics of the relay optical system also serves the purpose of forming an exit pupil. The exit pupil is the refocused image of the aperture stop; therefore by placing an aperture 68 at this location, any extraneous energy from unwanted sources is substantially eliminated from reaching the detector matrix. To provide and maintain a compact optical system, the relay optical system is included between the primary and secondary reflectors.

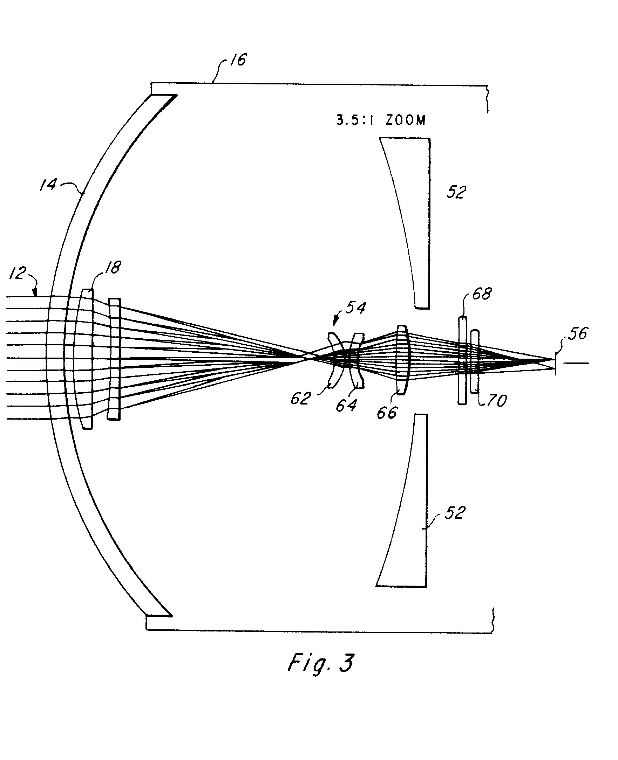

Referring now to Figure 3 for a description of the wide field of view. Again the hardware has been removed for clarity and tension has been applied to the cable 46 (Figs. 1a and 1b) to remove the secondary reflector 22 from the optical path.

Thus radiant energy 12 from a scene passes through the window 14 along its optical axis through a refractive objective lens doublet 18 to the refractive relay group 54 which is shared with the narrow field of view.

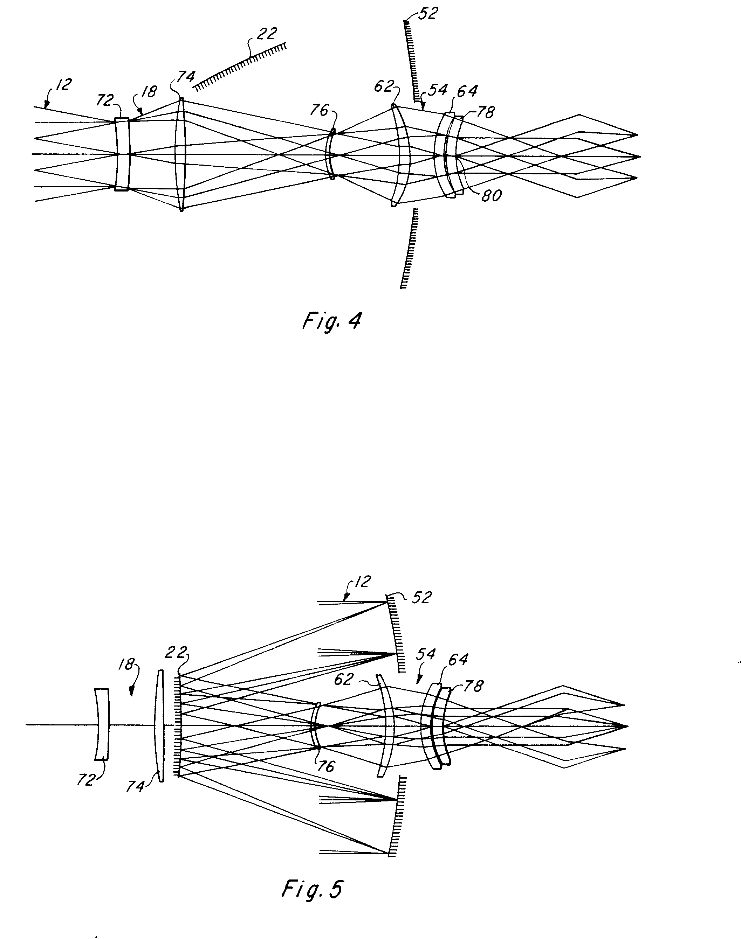

Referring now to Figure 4 for a description of a reflective afocal wide field of view for a dual field of view system in which the objective lens doublet 18 comprises a positive concave-convex lens 72 and negative concave lens 74. The secondary reflector 22 is removed from the optical path. A positive lens 76 is inserted just in front of the first focal plane and an eye piece 58. Positive lens 76, if used, need not be removed from the optical path for use of the narrow field-of-view. The eye piece includes a collimating lens system 54 which has a positive concave-convex lens 62, a negative concave-convex lens 64 and a second negative concave-convex lens 78.

The radiant energy 12 from the scene passes through the objective lens 18 to form by lenses 72 and 74, a much wider field of view than the objective lens 18 of the device of Figure 3. The converging wide angle field of view passes through lens 76 which flattens the wide angle field of view and transfers the focal plane to the relay lenses 62 and 64 of eye piece 54 which relays the focal plane through lens 78 of the eye piece to a second focal plane position outside primary reflector 52 and secondary reflector 22. The objective lens 18 and eye piece 54 form the afocal system. The air space 80 between lenses 64 and 78 provides abberation control.

Referring now to Figure 5 for a description of a reflective afocal narrow field of view for a dual field of view system. The structure is identical to that described in Fig. 4 except that the secondary reflector 22 is inserted in the optical path to block the wide angle field of view radiant energy. The radiant energy 12 from the scene of the narrow field of view is reflected by primary reflector 52 and secondary reflector 22 into the optical path.

0145845

- 6 -

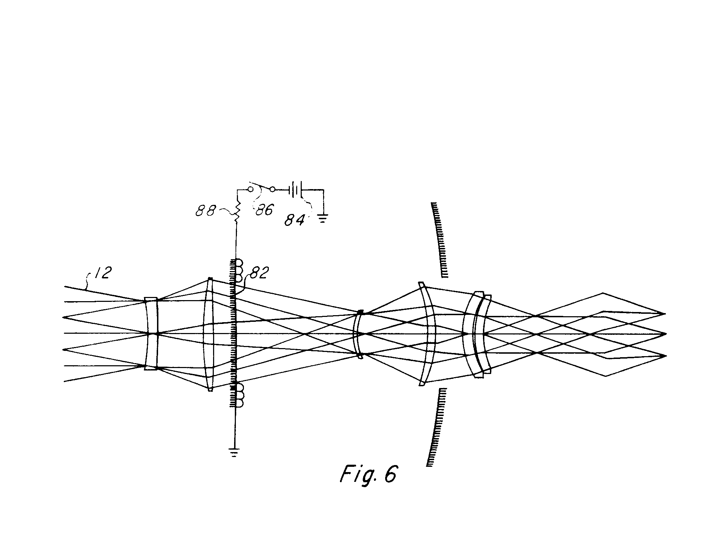

Referring now to Figure 6 for a description of a second embodiment of the invention. In this embodiment, the secondary reflector 22 of Figure 4 is replaced by a reflector/transparent optical element 82. The transparent/reflector element 22 is made of a material such as, for example, vanadium dioxide which when heated changes from a transparent body to a reflector body. Heat for the element may be provided by a simple circuit which includes a source of power 84 connected to one side of a suitable switch 86 having its other side connected through a load resistor 88 to a high resistance coil 82 thermally connected to the optical element 82. The remaining optical elements are those described in conjunction with Figure 4. It is to be appreciated that radiant energy reflected by the primary reflector during operation in the wide field of view does not interfere with the wide field of view as the radiant energy is of very low intensity due to the transmissive nature of element 82 when in the wide field of view.

Although preferred embodiments of the present invention have been described in detail, it is to be understood that various changes, substitutions, and alterations can be made therein without departing from the scope of the invention as defined by the appended claims.

WHAT IS CLAIMED IS:

1. A dual field of view optical system comprising:

(a) a narrow field of view optical subsystem;

(b) a wide field of view optical subsystem;

(c) a common optical subsystem in optical alignment with the wide field of view optical subsystem; and

(d) control means for controlling selectively the optical coupling of the narrow field of view subsystem and the wide field of view subsystem to the common optical subsystem.

2. A dual field of view optical system according to Claim 1 wherein the narrow field of view subsystem includes a primary reflector and a secondary reflector, the wide field of view includes an objective lens system, and the control means for controlling selectively the optical coupling of the narrow field of view subsystem and the wide field of view subsystem comprises a mechanical means for selectively removing and inserting the secondary reflector into the optical path between the wide field of view subsystem and the common optical subsystem for selectively coupling the narrow field of view subsystem and the wide field of view subsystem to the common optical system.

3. A dual field of view optical system according to Claim 1 wherein the narrow field of view subsystem includes a primary reflector and a transparent/reflective optical element, said transparent/reflective optical element mounted in the optical path between the wide field of view subsystem and the common optical subsystem and the control means for controlling selectively the optical coupling of the narrow field of view subsystem and the wide field of view subsystem to the common optical subsystem comprises an electrical means for converting the transparent/reflective optical element into a secondary reflector for blocking the wide field of view subsystem from the common subsystem and optically connecting the narrow field of view subsystem to the common optical system.

4. A dual field of view optical system according to Claim 1 wherein the narrow field of view optical subsystem is a catadioptric optical subsystem for receiving and focusing radiant energy emanating from a scene to form a focal plane at a first location.

5. A dual field of view optical system according to Claim 4 wherein the catadioptric optical subsystem comprises an optical path including a refractive window, an apertured primary reflector and a secondary reflector.

6. A dual field of view optical system according to Claim 5 wherein the refractive window is a zinc sulfide window and the first and second reflectors are aluminum reflectors.

7. A dual field of view optical system according to Claim 1 wherein the wide field of view optical subsystem includes a lens doublet for receiving and focusing radiant energy emanating from a scene to form a focal plane at a first position.

8. A dual field of view optical system according to Claim 7 wherein the lens doublet includes a positive concave-convex lens and a negative concave lens.

9. A dual field of view optical system according to Claim 1 wherein the optical subsystem common to the narrow and wide band fields of view comprises an optical eye piece for transferring a focal plane from a first position to a second position.

10. A dual field of view optical system according to Claim 9 wherein the common optical subsystem further includes a lens positioned adjacent to the focal plane at the first position for flattening the image of the wide and narrow field of views.

11. A dual field of view optical system according to Claim 9 wherein the optical eye piece includes a relay lens system and an objective lens.

Fig. 1b

Fig. 1a

Fig. 2

0145845

3.5:1 ZOOM

Fig. 3

0145845

4 / 5

Fig. 4

Fig. 5

88  86  84

82

12

**Fig. 6**

European Patent
Office

**EUROPEAN SEARCH REPORT**

Application number

EP 84 11 0278

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 051 970 (HONEYWELL INC.) <br><br> * Claims 1, 5, figures * <br><br> --- | 1,2,4, 5,7,8 | G 02 B 17/08 |
| A | EP-A-0 080 566 (TEXAS INSTRUMENTS INC.) <br> * Figure, claims 6, 7 * <br><br> ----- | 4-6,9- 11 | |

| | |
|---|---|
| | **TECHNICAL FIELDS SEARCHED (Int. Cl.4)** |
| | G 02 B 17/08 |

The present search report has been drawn up for all claims

| Place of search | Date of completion of the search | Examiner |
|---|---|---|
| BERLIN | 10-01-1985 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82